# EUROPEAN PATENT APPLICATION

(11) **EP 1 182 803 A1**
(43) Date of publication of application: **27.02.2002**
(21) Application number: 01912182.1
(22) Date of filing: 08.03.2001
(51) Int. Cl.: H04B 7/26

(54) **RADIO COMMUNICATION APPARATUS AND RADIO COMMUNICATION METHOD**

(30) Priority: 30.03.2000 JP 2000094662
(71) Applicant: MATSUSHITA ELECTRIC INDUSTRIAL CO., LTD., Kadoma-shi, Osaka 571-8501 (JP)
(72) Inventor: KANEMOTO, Hideki, Yokosuka-shi, Kanagawa 239-0847 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0101806
(87) International publication number: WO0176103

(57) **Abstract**

A target SIR value comparator 116 compares a target SIR value held by a target SIR value holder 110 with a threshold value held by a target SIR threshold value holder 115, and sends a comparison result to a spreading code selector 117. The spreading code selector 117 sets a spreading code to be used by a communication terminal apparatus based on the comparison result, and sends a set result to a frame structuring section 111 and despreader 104 as spreading code information. The frame structuring section 111 sends transmission information having spreading code information added to a modulator 112. The despreader 104 provides despread processing to a received signal using a spreading code recognized using spreading code information.

## Description

### Technical Field

The present invention relates to a radio communication apparatus for use in a mobile radio communication system, and particularly to a radio communication apparatus for use in a mobile radio communication system of CDMA (Code Division Multiple Access).

### Background Art

In conventional CDMA communication, an apparatus on a transmitter side (hereinafter referred to as transmitter's apparatus) performs spread processing using a spreading code with respect to an information signal, and transmits the information signal subjected to spread processing. An apparatus on a receiver side (hereinafter referred to as receiver's apparatus) performs despread processing using a spreading code with respect to the received signal so as to extract an original information signal. Namely, in CDMA communication, a communication channel is divided using the spreading codes so as to multiplex a plurality of channels.

A plurality of spreading codes is included as spreading codes for use in spread processing due to the difference in a code length or generation steps. In the spreading codes for use in spread processing, it is favorable that there is no correlation therebetween, but sometimes there occurs the correlation there between.

However, in the conventional CDMA communication, the following problem exists.

Namely, in the case where there is a correlation between a spreading code, which a certain receiver's apparatus uses in despread processing, and a spreading code, which other user uses in spread processing, the signal obtained by despread processing at the receiver's apparatus is subjected to interference by the transmission signal from the other user. This results in deterioration of communication quality of the receiver's apparatus.

Particularly, in the case where the receiver's apparatus uses a spreading code with a short code length (low spreading factor), the communication quality of receiver's apparatus is further deteriorated.

Namely, firstly, the spreading code with a short code length often has a correlation to the signal other than a desired signal in the case where a delayed wave occurs due to the state of a propagation path. Secondly, the spreading code with a short code length has a low capability of canceling interference since the spreading factor is low.

It is an object of the present invention is to provide a radio communication apparatus, which keeps communication quality good by simple processing.

### Disclosure of Invention

It is an object of the present invention is to provide a radio communication apparatus, which keeps communication quality good by simple processing. This object can be attained by changing transmission processing and reception processing based on the communication quality. Namely, this object can be attained by changing transmission processing and reception processing based on target reception quality values such as a target SIR value, target Ec/Ior (desired reception power/total reception power). More specifically, a spreading code, which is to be used in transmission processing and reception processing, is set based on such communication quality, the presence or absence of execution of interference cancellation processing to the received signal is set. Moreover, a transmission rate of a communication signal is set, or an error correcting code, which is to be used in error correcting processing, is set, whereby attaining the above object.

### Brief Description of Drawings

FIG. 1 is a block diagram illustrating the configuration of a base station apparatus having a radio communication apparatus according to a first embodiment of the present invention;
FIG. 2 is a block diagram illustrating the configuration of a communication terminal apparatus having the radio communication apparatus according to the first embodiment of the present invention;
FIG. 3 is a schematic diagram illustrating one example of a code tree in connection with orthogonal variable spreading factors;
FIG. 4 is a flowchart illustrating the operation of the base station apparatus having the radio communication apparatus according to the first embodiment;
FIG. 5 is a block diagram illustrating the configuration of a base station apparatus having the radio communication apparatus according to a second embodiment of the present invention;
FIG. 6 is a schematic view illustrating one example of the configuration of an interference canceling apparatus in the base station apparatus having the radio communication apparatus according to the second embodiment of the present invention;
FIG. 7 is a block diagram illustrating the configuration of a base station apparatus having a radio communication apparatus according to a third embodiment of the present invention;
FIG. 8 is a flowchart illustrating the operation of the base station apparatus having the radio communication apparatus according to the third embodiment of the present invention;
FIG. 9 is a block diagram illustrating the configuration of a base station apparatus having a radio communication apparatus according to a fourth embodiment of the present invention;
FIG. 10 is a block diagram illustrating the configuration of a communication terminal apparatus having the radio communication apparatus according to the fourth embodiment of the present invention;
FIG. 11 is a block diagram illustrating the configuration of a base station apparatus having a radio communication apparatus according to a fifth embodiment of the present invention;
FIG. 12 is a block diagram illustrating the configuration of a communication terminal apparatus having the radio communication apparatus according to the fifth embodiment of the present invention;
FIG. 13 is a block diagram illustrating the configuration of a base station apparatus having a radio communication apparatus according to a seventh embodiment of the present invention;
FIG. 14 is a flowchart illustrating the operation of the base station apparatus having the radio communication apparatus according to the seventh embodiment of the present invention; and
FIG. 15 is a block diagram illustrating the configuration of a base station apparatus having a radio communication apparatus according to a sixth embodiment of the present invention.

### Best Mode for Carrying Out the Invention

Best mode for carrying out the present invention will be specifically explained with reference to the drawings accompanying herewith.

### (Embodiment 1)

This embodiment explains the case in which a spreading code for use in communication is changed based on a target SIR value set by a base station apparatus in CDMA radio communication system that performs transmission power control between a communication terminal apparatus and the base station apparatus.

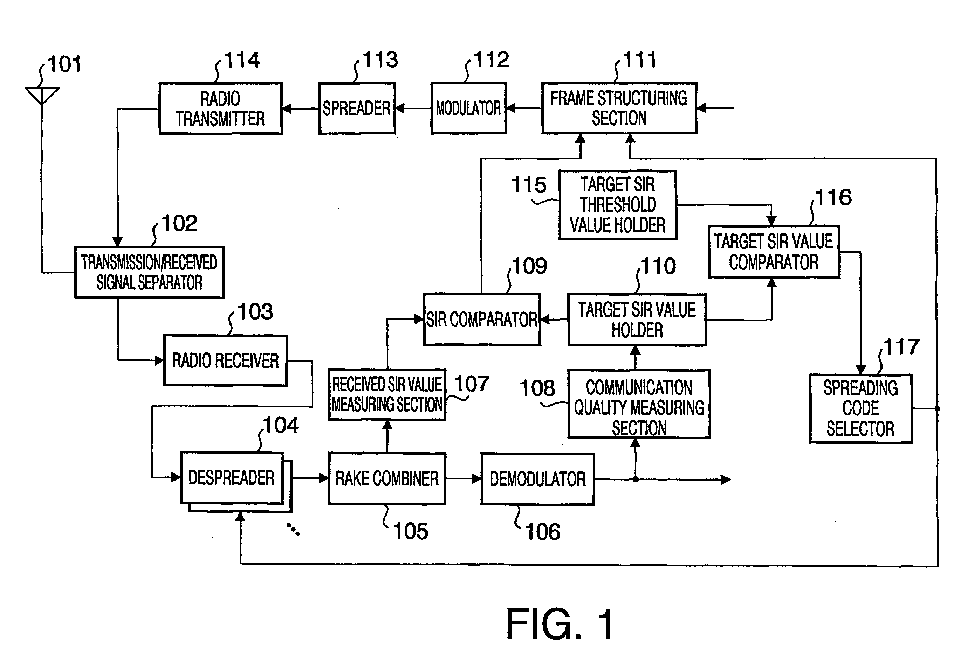

FIG. 1 is a block diagram illustrating the configuration of a base station apparatus having a radio communication apparatus according to a first embodiment of the present invention.

Referring to FIG. 1, a signal transmitted from a communication terminal apparatus is received by a radio receiver 103 via an antenna 101 and a transmission/received signal separator 102. A signal (received signal) sent from the transmission/received signal separator 102 is subjected to predetermined radio processing such as frequency conversion by the radio receiver 103. The received signal subjected to predetermined radio processing is despread by a despreader 104. It should be noted that the spreading code used by the despreader 104 is one that is selected by a spreading code selector 117 to be described later.

The signal despread by the despreader 104 is subjected to Rake combining by a Rake combiner 105. The signal subjected to Rake combining is demodulated by a demodulator 106. By this modulation, received signal is output. Moreover, the signal subjected to Rake combining is sent to a received SIR value measuring section 107. The received SIR value measuring section 107 measures a received SIR value using the signal subjected to Rake combining. The received SIR value measured is sent to an SIR comparator 109.

The received signal obtained by the demodulator 106 is sent to a communication quality measuring section 108. The communication quality measuring section 108 measures quality of received data sent from the demodulator 106 and sets a target reception quality value (target SIR value in this case) based on the measurement result. Note that quality of received data can be measured by use of BER, FER, or CRC.

The target SIR value set by the communication quality measuring section 108 is held by a target SIR value holder 110. The target SIR value held by the target SIR value holder 110 is sent to the SIR comparator 109 and a target SIR value comparator 116. The SIR comparator 109 compares the received SIR value measured by the received SIR value measuring section 107 with the target reception quality value (target SIR value in this case) held by the target SIR value holder 110. Transmission power control information is generated based on the comparison result. It should be noted that transmission power control information is one that instructs the communication terminal apparatus to increase/decrease transmission power. This transmission power control information is sent to a frame structuring section 111.

The target SIR value comparator 116 performs a comparison between the target SIR value held by the target SIR value holder 110 and a threshold value held by a target SIR threshold value holder 115. The comparison result is sent to the spreading code selector 117.

The spreading code selector 117 sets a spreading code, which the communication terminal apparatus should use, based on the comparison result sent from the target SIR value comparator 116. Namely, in the case where the target SIR value is equal to or less than the threshold value (i.e., communication quality is good), the spreading code, which is currently used by the communication terminal apparatus, is set as a spreading code, which the communication terminal apparatus should use. Conversely, in the case where the target SIR value is greater than the threshold value (i.e., communication quality is poor), the spreading code, which is different from one that is currently used by the communication terminal apparatus, is set as a spreading code, which the communication terminal apparatus should use. The method for setting the spreading code will be specifically described later. Information (spreading code information) relating to the set spreading code is sent to the frame structuring section 111 and despreader 104.

Frame structuring section 111 adds transmission power control information sent from the SIR comparator 109 and spreading code information sent from the spreading code selector 117 to the information signal, and thereby generates transmission information.

Transmission information generated by the frame structuring section 111 is subjected to primary modulation by a modulator 112 and the resultant is spread by the spreader 113. Spread transmission information is subjected to predetermined radio processing such as frequency conversion by the radio transmitter 114 to be a transmission signal. This transmission signal is transmitted to the communication terminal apparatus via the transmission/received signal separator 102 by the antenna 101.

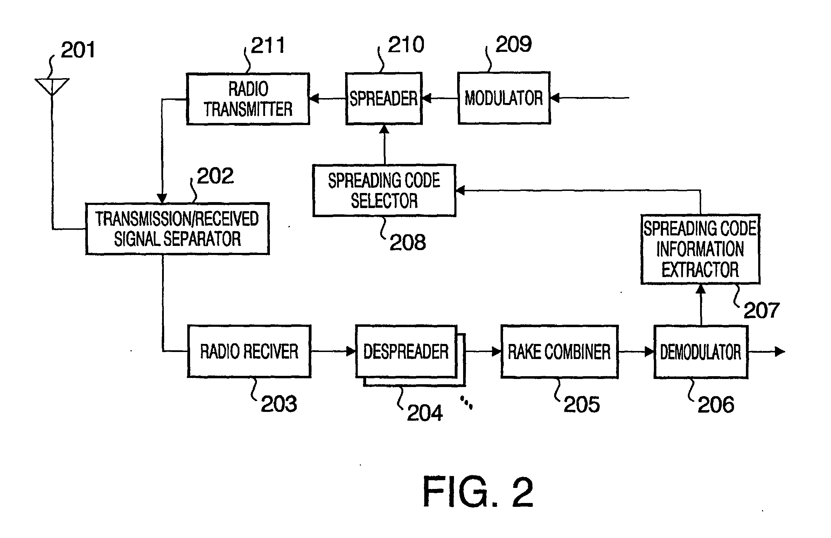

FIG. 2 is a block diagram illustrating the configuration of a communication terminal apparatus having the radio communication apparatus according to the first embodiment of the present invention.

Referring to FIG. 2, the signal transmitted from the base station apparatus is received by a radio receiver 203 via an antenna 201 and transmission and reception separator 202. A signal (received signal) sent from the transmission/received signal separator 202 is subjected to predetermined radio processing such as frequency conversion by the radio receiver 203. The received signal subjected to predetermined radio processing is despread by a despreader 204.

The signal despread by the despreader 204 is subjected to Rake combining by a Rake combiner 205. The signal subjected to Rake combining is demodulated by a demodulator 206. By this modulation, received signal is output. The received signal is sent to a spreading code information extractor 207.

The spreading code information extractor 207 extracts spreading code information using received data sent from the demodulator 206. Spreading code information extracted is sent to a spreading code selector 208. The spreading code selector 208 recognizes a spreading code instructed by the aforementioned base station apparatus based on spreading code information sent from the spreading code information extractor 207. The spreading selector 208 instructs a spreading code to be used in spread processing to a spreader 210 based on the recognition result.

While, transmission information is subjected to primary modulation by a modulator 209. The spreader 210 spreads transmission information subjected to primary modulation using a spreading code instructed by the spreading code selector 208. Spread transmission information is subjected to predetermined radio processing such as frequency conversion by a radio transmitter 211 to be a transmission signal. This transmission signal is transmitted to the base station apparatus via the transmission/received signal separator 202 by the antenna 201.

Though this is not illustrated, it is needless to say that the aforementioned transmission power control information is extracted from received data obtained by the demodulator 206 and transmission power is controlled by the radio transmitter 211 based on this transmission power control information.

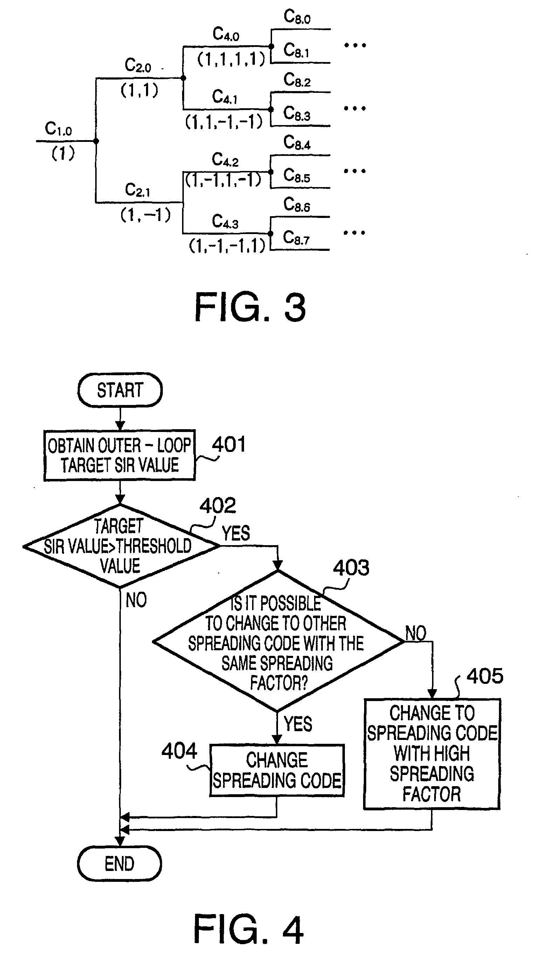

An explanation will be next given of a spreading code setting method with reference to FIG.3. FIG. 3 is a schematic diagram illustrating one example of a code tree in connection with an orthogonal variable spreading factor. In FIG. 3, C_{1,0} represents the zeroth code of code length 1. Similarly, C_{2,1} and C_{4,2} represent the first code of code length 2 and the second code of code length 4, respectively.

Here, it is assumed that the communication terminal apparatus uses spreading code C_{4,1}. As explained above, in the case where the target SIR value is greater than the threshold value, the spreading code, which the communication terminal apparatus should use, is changed. The changing method can be explained as follows:

Namely, in the case where the other codes (C_{4,0}, C_{4,2} or C_{4,3}) having the same code length (spreading factor) as that of the current spreading code is not used in other communication and is usable in the corresponding communication terminal apparatus (first case), this code is selected.

According to this selection, in the case where there is a correlation between the spreading code, which the despreader 104 currently uses, and the spreading code used by the other user, and this causes the signal obtained by the despread processing in the despreader 104 is subjected to interference of the transmission signal from the other user. The changing a spreading code in despreader 104 to the aforementioned spreading code, increases a possibility that the above factor will be solved. As a result, the quality of the signal resulting from the despread processing by the despreader 104 becomes good.

In the case other than the first case (namely, the other code having the same code length as that of the current spreading code is used in other communication or is not usable in the corresponding communication terminal apparatus), a code (C_{8,2} or C_{8,3}), which has a longer code length than of the current spreading code and which is derived from the current spreading code, is selected.

According to this selection, the following effect can be obtained in addition to the effect that is obtained by the first case.More specifically, since the spreading code changed in the despreader 104 becomes the spreading code with a long code length, a possibility is reduced that the spreading code changed in the despreader 104 has the correlation to the signal other than the desired signal and the capability of canceling interference is reduced. As a result the quality of the signal resultant from despread processing by the despreader 104 becomes good.

In the case where a reduction in an information transmission rate using the spreading code with a long code length is not permitted, multi-code transmission using two spreading codes (C_{8,2}, C_{8,3}) may be performed. The above has explained the method for setting the spreading code.

An explanation will be next given of the operation of the radio communication apparatus according to this embodiment with reference to FIG. 4. FIG. 4 is a flowchart illustrating the operation of the base station apparatus having the radio communication apparatus according to the first embodiment.

Referring to FIG. 4, in step (hereinafter referred to as "ST") 401, a target SIR value is obtained. In ST402, a comparison between the target SIR value and the threshold value is performed. In the case where the target SIR value is equal to or less than the threshold value (communication quality is good), processing is ended. While, in the case where the target SIR value is greater than the threshold value (communication quality is poor), processing goes to ST403.

In ST403, it is determined whether or not the use of the spreading code with the same spreading factor (code length) as that of the current spreading code is possible. If the use of the spreading code with the same spreading factor is possible, processing goes to ST404. If the use of the spreading code with the same spreading factor is not possible, processing goes to ST405. In ST404, the same spreading code with the same code length as that of the current spreading code is set and processing is ended. In ST405, the spreading code with a longer spreading code length than that of the current spreading code is set and processing is ended.

Thus, according to this embodiment, the communication quality is detected using the target SIR, and the spreading code for use in spread processing is changed based on the detected communication quality. This makes it possible to prevent interference from being caused by the transmission signal from the other user in the signal obtained from the despread processing so that the communication quality can be maintained good.

Additionally, this embodiment explained the case in which there was the correlation between the spreading code, which was used by the despreader 104, and the spreading code, which was used by the other user. This embodiment also explained the case in which the target SIR was used as an index for detecting deterioration of communication quality caused by code length of the spreading code used by the spreader 104. However, the present invention is not limited to the above cases. The present invention can be applied to the case of using other index (BER and the like), which can detect deterioration of communication quality caused by the above factor.

The inventors of the present invention paid attention to the use of delayed wave characteristic of the received signal as an index for detecting deterioration of communication quality. In this case, the delayed wave characteristic of communication terminal apparatus drastically varies with movement of the communication terminal apparatus. Then, they focused attention on the point that a load taken on processing was increased and the point that it was unclear what influence the delayed wave characteristic of the received signal directly exerted upon the quality of communication.

While, the target SIR does not vary so drastically as compared with the delayed wave characteristic. Accordingly, the use of target SIR as an index makes it to suppress the load on spreading code change processing. Namely, the communication quality can be maintained good by simple processing. Moreover, the target SIR is a parameter that directly relates to the communication quality, and the use of target SIR as an index makes it possible to maintain the communication quality efficiently. Still moreover, even in a case where a target Ec/Ior (desired reception power/total reception power) is used as an index, the same effect as the case using the target SIR can be obtained. Note that any index can be used if the index is equivalent to the signal to interference ratio as well as the target SIR and target Ec/Ior.

Moreover, the inventors of the present invention paid attention to the use of influence provided from the other communication system as an index for detecting deterioration of communication quality. In this case, the output (peak) of a correlator used in despread processing is observed in order to detect the influence from the other communication system. However, even if the peak is detected at the output of correlator, it cannot be determined whether the detected peak is derived from the delayed wave of desired signal or the transmission signal of other user. Accordingly, the inventors found out that the communication quality of such BER and the like were resultantly required.

Though FIGS. 1 and 2 illustrate only the configuration of one user, it is needless to say that this embodiment can be applied to the plurality of users.

Moreover, this embodiment explained the case in which the base station apparatus selected the spreading code based on the communication quality. However, the present invention is not limited to this case, and can be applied to the case in which the communication terminal apparatus selects the spreading code based on the communication quality.

### (Embodiment 2)

This embodiment will explain the case in which an interference canceling apparatus is operated based on a target SIR value set by the base station apparatus in spreading code CDMA radio communication system that performs transmission power control between the communication terminal apparatus and the base station apparatus.

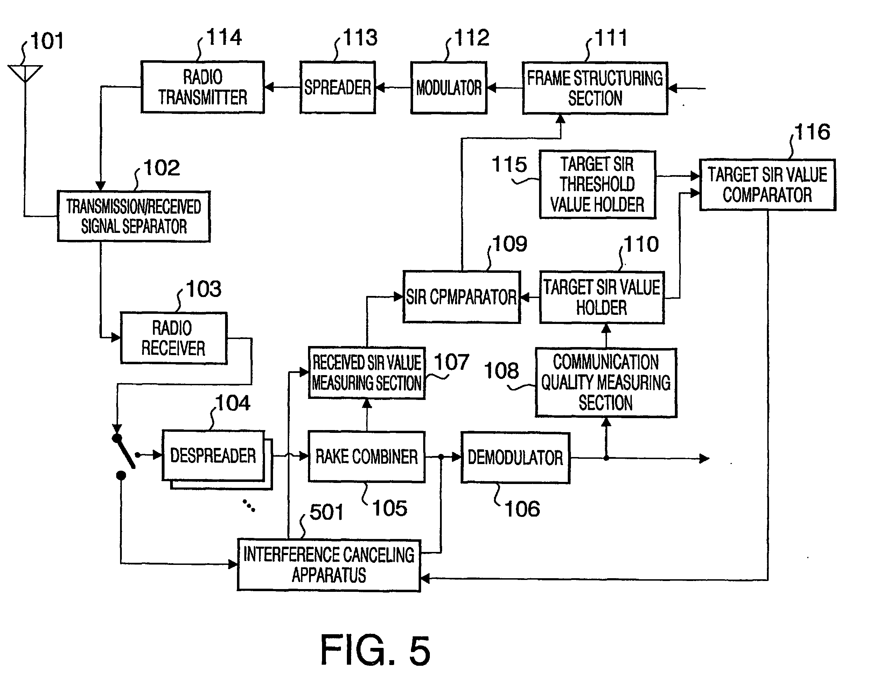

FIG. 5 is a block diagram illustrating the configuration of a base station apparatus having the radio communication apparatus according to a second embodiment of the present invention. In FIG. 5, the same reference numerals as those of FIG. 1 are added to the same components as those of Embodiment 1 (FIG. 1), and the specific explanation is omitted.

Referring to FIG. 5, similar to Embodiment 1, a comparison between the target SIR value held by the target SIR value holder 110 and the threshold value held by the target SIR threshold value holder 115 is performed by the target SIR value comparator 116. The comparison result is sent to an interference canceling apparatus 501.

The interference canceling apparatus 501 provides interference cancellation processing to the predetermined-processing processed received signal from the radio receiver 103. Namely, in the case where the target SIR value is less than the threshold value (i.e., communication quality is good), no interference cancellation processing is provided to the received signal. In this case, the received signal from the radio receiver 103 is sent to the despreader 104 similar to Embodiment 1.

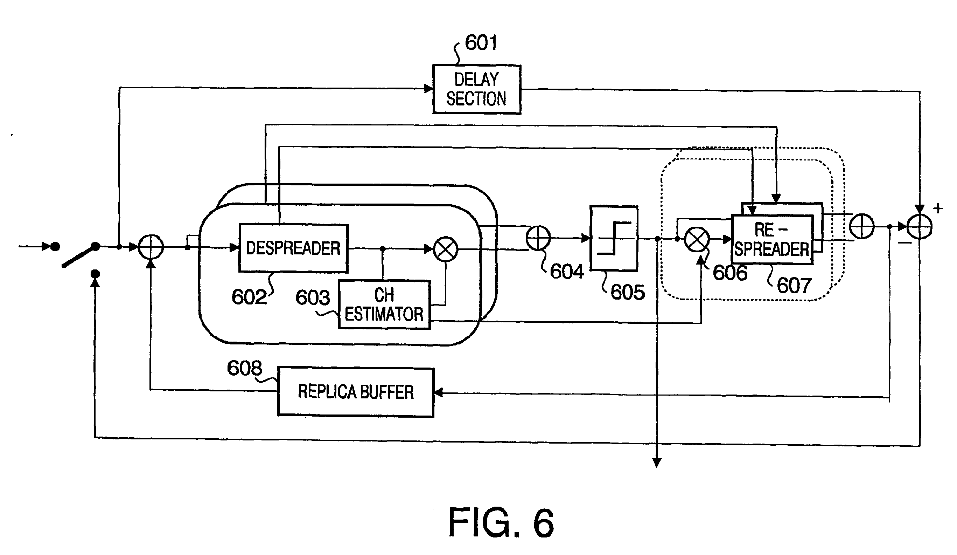

Conversely, in the case where the target SIR value is greater than the threshold value (i.e., communication quality is poor), interference cancellation processing is provided to the received signal. In this case, the received signal from the radio receiver 103 is sent to not the despreader 104 but the interference canceling apparatus 501. The received signal subjected to interference cancellation processing by the interference canceling apparatus 501 is sent to the demodulator 106. The interference canceling apparatus 501 will be explained with reference to FIG. 6.

FIG. 6 is a schematic view illustrating one example of the configuration of the interference canceling apparatus in the base station apparatus having the radio communication apparatus according to the second embodiment of the present invention. Referring to FIG. 6, an input signal (received signal from the radio receiver 103) is buffered by a delay section 601 while being despread for each path by a despreader 602, and a channel estimation is made by a channel estimator 603.

The received signals, which are despread for each path, are combined by an adder 604. The signals combined by the adder 604 are subjected to symbol temporary decision by a temporary deciding section 605. The symbol subjected to temporary decision is multiplied by the channel estimation by a multiplier 606. Then, the resultant is re-spread by a re-spreader 607 to produce a replica signal, and the replica signal is removed from the received signal buffered by the delay section 601. The re-spread replica signal is stored in a replica buffer 608.

The received signal from which the replica signal is removed is used as an input signal again. This input signal is added to the replica signal generated in the previous stage, and despreading, temporary decision, and replica generation are provided to the resultant signal similar to the above.

The repetition of aforementioned processing makes it possible to extract the corresponding signal accurately and to demodulate the signal accurately. Note that the interference canceling apparatus shown in FIG. 6 is one example, and the interference canceling apparatus of the other system may be used. For example, such an apparatus that provides interference cancellation to the plurality of users may be used.

Thus, according to this embodiment, the communication quality is detected using the target SIR, and interference cancellation processing is provided to the received signal based on the detected communication quality, making it possible to reduce interference caused by the transmission signal from the other user in the signal obtained by despread processing. Accordingly, this allows the communication quality to be maintained good.

Moreover, this embodiment explained the case in which the base station apparatus performed interference cancellation processing to the received signal based on the communication quality. However, the present invention is not limited to this case, and can be applied to the case in which the communication terminal apparatus performs interference cancellation processing to the received signal based on the communication quality.

### (Embodiment 3)

This embodiment will explain the case in which the spreading code used in communication is changed and an interference canceling apparatus is operated based on a target SIR value set by the base station apparatus in spreading code CDMA radio communication system that performs transmission power control between the communication terminal apparatus and the base station apparatus.

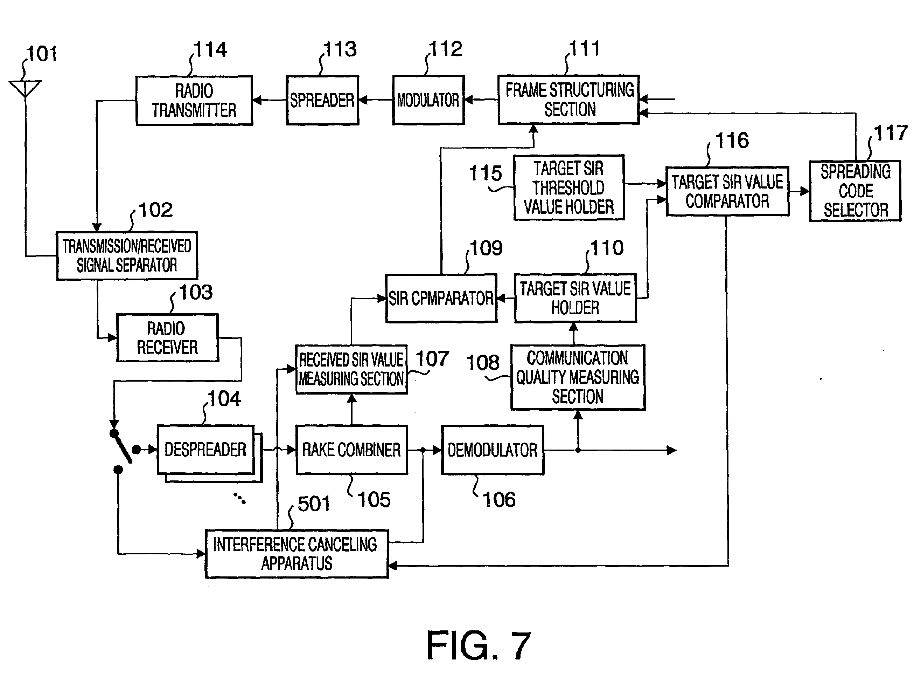

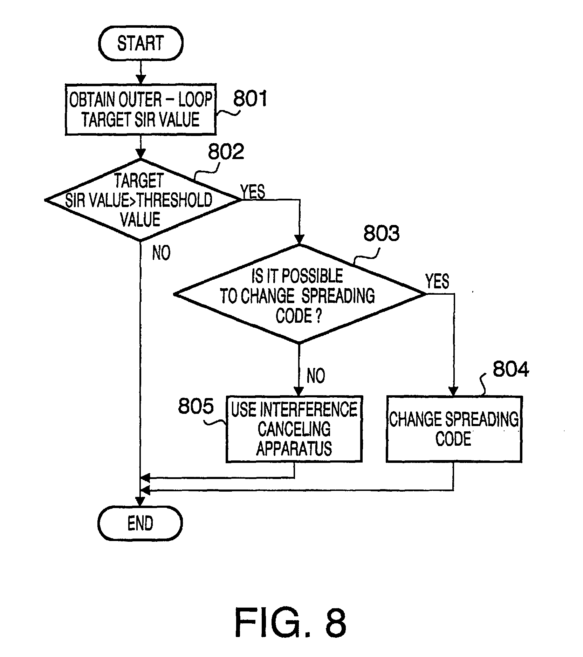

FIG. 7 is a block diagram illustrating the configuration of a base station apparatus having a radio communication apparatus according to a third embodiment of the present invention. In FIG. 7, the same reference numerals as those of FIG. 1 or FIG. 2 are added to the same components as those of Embodiment 1 (FIG. 1) or Embodiment 2 (FIG. 5), and the specific explanation is omitted. FIG. 8 is a flowchart illustrating the operation of the base station apparatus having the radio communication apparatus according to the third embodiment of the present invention.

Referring to FIGS. 7 and 8, in ST801, a target SIR value is obtained. In ST802, a comparison between the target SIR value and the threshold value is performed. In the case where the target SIR value is equal to or less than the threshold value (communication quality is good), processing is ended. While, in the case where the target SIR value is greater than the threshold value (communication quality is poor), processing goes to ST803.

In ST803, it is determined whether or not the use of the spreading code with the same spreading factor (code length) as that of the current spreading code is possible. If the use of the spreading code with the same spreading factor is possible, processing goes to ST804.

Next, when the use of the above spreading code is not possible, it is determined whether or not the use of the spreading code with a code length longer than as that of the current spreading code is possible. In the case where the use of the above spreading code is possible, processing goes to ST804. In the case where the use of the above spreading code is not possible or the use of the above spreading code is possible but the reduction in the transmission rate is not allowed, processing goes to ST805.

In ST804, the spreading code explained in Embodiment 1 is set by the spreading code selector 117. In ST805, interference cancellation processing as explained in Embodiment 2 is performed by the interference canceling apparatus 501.

Thus, according to this embodiment, the communication quality is detected using the target SIR and the spreading code to be used in spread processing is changed based on the detected communication quality, making it possible to prevent interference from being caused by the transmission signal from the other user in the signal obtained by despread processing. Accordingly, this allows the communication quality to be maintained good. Moreover, in the case where the change in the spreading code to be used in the spread processing is not possible or the change is possible but the reduction in transmission rate is not allowed, interference cancellation processing is provided to the received signal. This makes it possible to reduce interference caused by the transmission signal from the other user in the signal obtained by despread processing. Accordingly, this allows the communication quality to be maintained good.

Moreover, this embodiment explained the case in which the base station apparatus performed interference cancellation processing to the received signal based on the communication quality. However, the present invention is not limited to this case, and can be applied to the case in which the communication terminal apparatus sets the spreading code and performs interference cancellation processing to the received signal based on the communication quality.

### (Embodiment 4)

This embodiment will explain the case in which the transmission rate is changed based on a target SIR value set by the base station apparatus in spreading code CDMA radio communication system that performs transmission power control between the communication terminal apparatus and the base station apparatus.

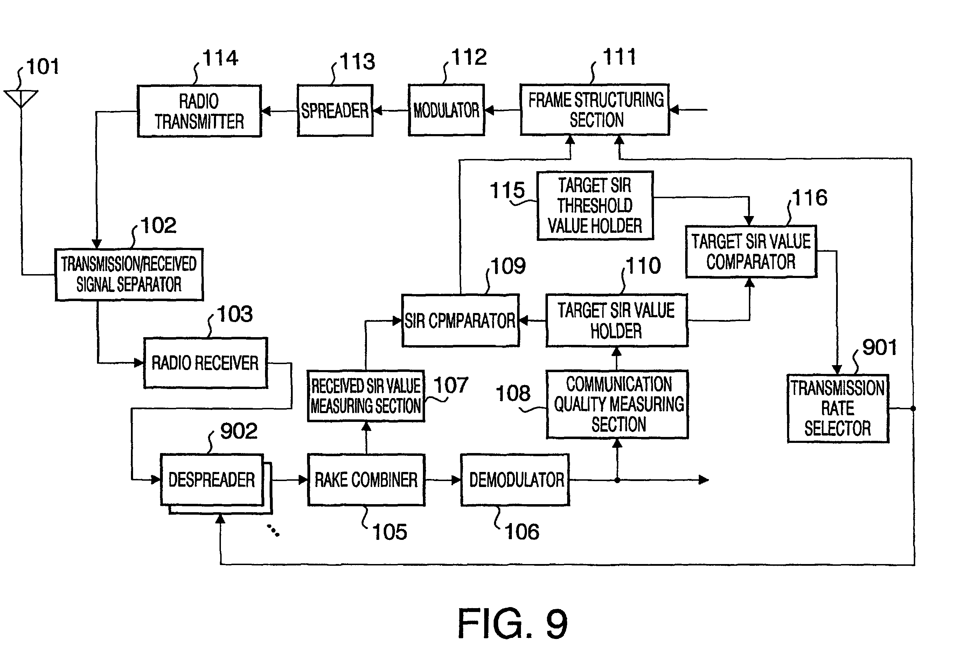

FIG. 9 is a block diagram illustrating the configuration of a base station apparatus having a radio communication apparatus according to a fourth embodiment of the present invention. In FIG. 9, the same reference numerals as those of FIG. 1 are added to the same components as those of Embodiment 1 (FIG. 1), and the specific explanation is omitted.

Referring to FIG. 9, similar to Embodiment 1, a comparison between the target SIR value held by the target SIR value holder 110 and the threshold value held by the target SIR threshold value holder 115 is performed by the target SIR value comparator 116. The comparison result is sent to a transmission rate selector 901.

The transmission rate selector 901 selects a transmission rate based on the comparison result sent from the target SIR value comparator 116. Namely, in the case where the target SIR value is equal to or less than the threshold value (communication quality is good), a transmission rate with a normal value is selected. While, in the case where the target SIR value is greater than the threshold value, a transmission rate with a reduced normal value is selected. Information (transmission rate information) relating to the selected transmission rate is sent to the frame structuring section 111 and a despreader 902 to be described later.

The frame structuring section 111 adds transmission power control information sent from the SIR comparator 109 and transmission rate information sent from the transmission rate selector 901 to the information signal , generates transmission information.

The despreader 902 recognizes the transmission rate based on transmission rate information sent from the transmission rate selector 901. Moreover, spread processing using the spreading code corresponding to the recognized transmission rate is performed. Namely, when the transmission rate is reduced, despread processing using the spreading code with a longer code length is performed.

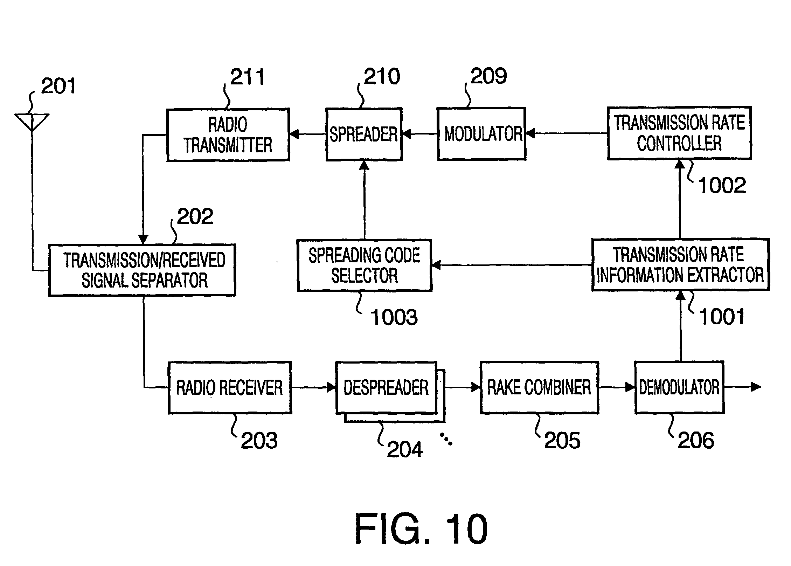

FIG. 10 is a block diagram illustrating the configuration of a communication terminal apparatus having the radio communication apparatus according to the fourth embodiment of the present invention. In FIG. 10, the same reference numerals as those of FIG. 2 are added to the same components as those of embodiment 1 (FIG. 2), and the specific explanation is omitted.

Referring to FIG. 10, a transmission rate information extractor 1001 extracts transmission rate information using received data sent from the demodulator 206. The extracted transmission rate information is sent to a transmission rate controller 1002 and a spreading code selector 1003.

The transmission rate controller 1002 recognizes the transmission rate instructed by the base station based on the transmission rate information sent from the transmission rate information extractor 1001. The transmission rate in the modulator 209 is controlled based on the result of recognition. Namely, in the case where the transmission rate is reduced, despread processing using the spreading code with a long code length is carried out.

The spreading code selector 1003 recognizes the transmission rate instructed by the base station based on the transmission rate information sent from the transmission rate information extractor 1001. An instruction of spreading code to be used in spread processing is provided to the spreader 210 based on the result of recognition. Namely, the spreading code selector 1003 instructs the spreader 210 to use the spreading code (spreading code with a longer code length when the transmission rate is reduced) corresponding to the transmission rate.

Thus, in the case where the target SIR value is greater than the threshold value (communication quality is poor), the transmission rate of information is reduced and the spreading code to be used is changed to the spreading code with a long code length and a high spreading factor. As a result, since the spreading code changed in the despreader 902 becomes the spreading code with a long code length, a possibility is reduced that the spreading code changed in the despreader 902 has the correlation to the signal other than the desired signal and the capability of canceling interference is increased. Accordingly, the quality of the signal obtained from despread processing in the despreader 902 becomes good. Moreover, the use of spreading code with a long code length in the spreader 210 can reduce transmission power in the radio transmitter 211. This makes it possible to decrease interference given to the other user by the communication terminal apparatus.

Thus, according to this embodiment, the communication quality is detected using the target SIR and the transmission rate and spreading code are changed based on the detected communication quality. This makes it possible to prevent interference from being caused by the transmission signal from the other user in the signal obtained by despread processing and reduce interference given to the other user. Accordingly, the communication quality can be maintained good.

Moreover, this embodiment explained the case in which the base station apparatus set the transmission rate based on the communication quality. However, the present invention is not limited to this case, and can be applied to the case in which the communication terminal apparatus sets the transmission rate based on the communication quality.

### (Embodiment 5)

This embodiment will explain the case in which error correcting processing is performed based on a target SIR value set by the base station apparatus in spreading code CDMA radio communication system that performs transmission power control between the communication terminal apparatus and the base station apparatus.

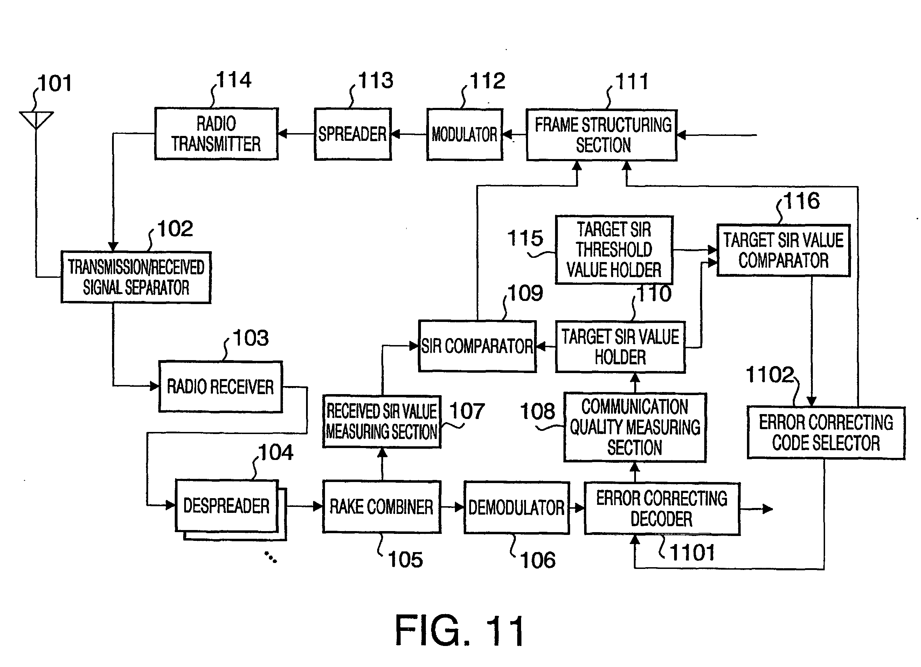

FIG. 11 is a block diagram illustrating the configuration of a base station apparatus having a radio communication apparatus according to a fifth embodiment of the present invention. In FIG. 11, the same reference numerals as those of FIG. 1 are added to the same components as those of Embodiment 1 (FIG. 1), and the specific explanation is omitted.

Referring to FIG. 11, received data obtained by the demodulator 106 is subjected to error correcting decoding by an error correcting decoder 1101. Received data subjected to error correcting decoding is sent to the communication quality measuring section 108. The error correcting code, which is used by the error correcting decoder 1101, is selected by an error correcting selector 1102 to be described later.

Similar to Embodiment 1, a comparison between the target SIR value held by the target SIR value holder 110 and the threshold value held by the target SIR threshold value holder 115 is performed by the target SIR value comparator 116. The comparison result is sent to the error correcting selector 1102.

The error correcting selector 1102 selects an error correcting code to be used by the communication terminal apparatus based on the comparison result sent from the target SIR value comparator 116. Namely, in the case where the target SIR value is equal to or less than the threshold value (i.e., communication quality is good), a normal error correcting code (e.g., convolutional code) is selected as a spreading code to be used by the communication terminal apparatus. Conversely, in the case where the target SIR value is greater than the threshold value (i.e., communication quality is poor), an error correcting code (e.g., Turbo code) with a higher error correcting capability than that of the normal error correcting code is selected as a spreading code to be used by the communication terminal apparatus. Information (error correcting code information) relating to the set error correcting code is sent to the frame structuring section 111 and error correcting decoder 1101.

The frame structuring section 111 adds transmission power control information sent from the SIR comparator 109 and error correcting code information sent from the error correcting code selector 1102 to an information signal, and generates the resultant as transmission information.

It should be noted that error correcting decoding is provided to a signal subjected to Rake combining by the Rake combiner 105, making it possible to use such an error correcting system that resultantly obtains a demodulation result.

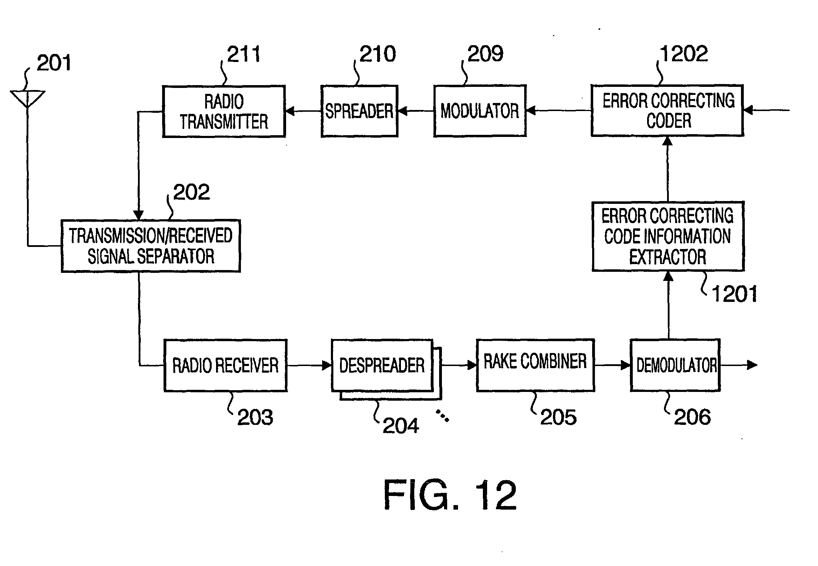

FIG. 12 is a block diagram illustrating the configuration of a communication terminal apparatus having the radio communication apparatus according to the fifth embodiment of the present invention. In FIG. 12, the same reference numerals as those of FIG. 2 are added to the same components as those of Embodiment 2 (FIG. 2), and the specific explanation is omitted.

Referring to FIG. 12, an error correcting code information extractor 1201 extracts error correcting code information using received data sent from the demodulator 206. The extracted error correcting code information is sent to an error correcting coder 1202.

The error correcting coder 1202 recognizes an error correcting code selected by the base station apparatus based on error correcting information sent from the error correcting code information extractor 1201. Moreover, the error correcting coder 1202 provides error correcting coding using the recognized error correcting code to transmission information. Transmission information subjected to error correcting coding sent to the modulator 210.

Thus, according to the present invention, the communication quality is detected using the target SIR and the error correcting code is set based on the detected communication quality. This makes it possible to reduce interference caused by the transmission signal from the other user in the signal obtained by despread processing and reduce interference given to the other user. Accordingly, the communication quality can be maintained good.

Moreover, this embodiment explained the case in which the base station apparatus set the error correcting code based on the communication quality. However, the present invention is not limited to this case, and can be applied to the case in which the communication terminal apparatus sets the error correcting code based on the communication quality.

### (Embodiment 6)

This embodiment will explain the case in which error correcting processing is performed and the number of iteration in error correcting decode processing is changed based on a target SIR value set by the base station apparatus in spreading code CDMA radio communication system that performs transmission power control between the communication terminal apparatus and the base station apparatus.

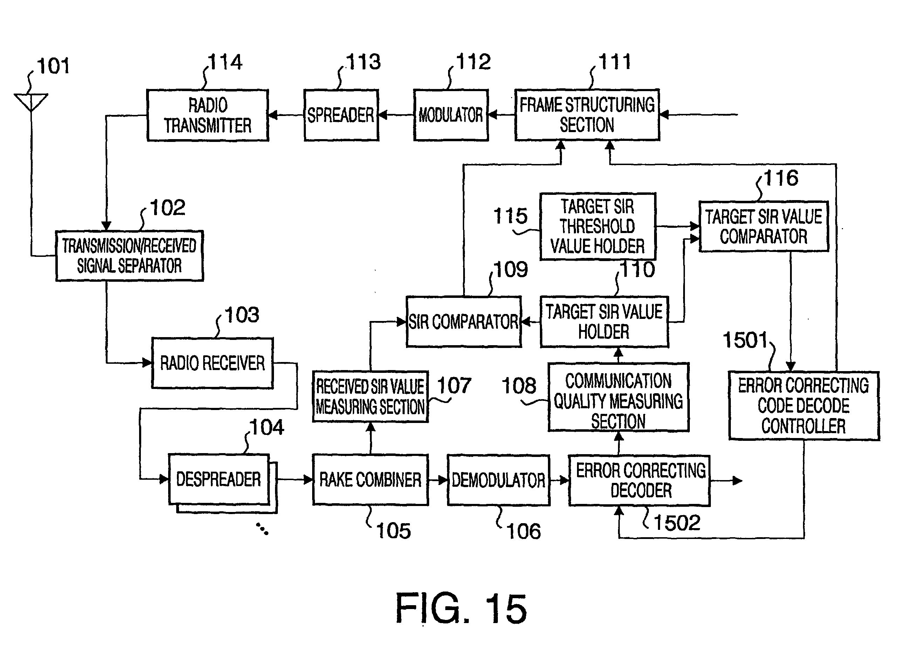

FIG. 15 is a block diagram illustrating the configuration of a base station apparatus having a radio communication apparatus according to a sixth embodiment of the present invention. In FIG. 15, the same reference numerals as those of FIG. 11 are added to the same components as those of Embodiment 5 (FIG. 11), and the specific explanation is omitted.

Referring to FIG. 15, an error correcting code decode controller 1501 performs the same processing as that of the error correcting code selector 1102 of Embodiment 5. Moreover, the number of iteration in the error correcting decoding is set based on the comparison result sent from the target SIR value comparator 116. More specifically, in the case where the target SIR value is low, the number of iteration is set to a low value (e.g., 6th grade). In the case where the target SIR value is high, the number of iteration is set to a high value (e.g., 10th grade). It is needless to say that the characteristic of decoding is improved with an increase in the number of iteration at the error correcting decoding time. The number of iteration thus set is sent to an error correcting decoder 1502.

Similar to Embodiment 5, the error correcting code selector 1502 selects an error correcting code to be used by the communication terminal apparatus based on the comparison result from the target SIR value comparator 116. Moreover, in this embodiment, error correcting decoding is performed by the number of iteration sent from the error correcting code decode controller 1501.

It is needless to say that control of the number of iteration of error correcting decoding can be performed not only when the target SIR value is greater than the threshold value (communication quality is poor) but also when the target SIR value is equal to or less than the threshold value.

Thus, according to this embodiment, the communication quality is detected using the target SIR and the error correcting code is set based on the detected communication quality. This makes it possible to reduce interference caused by the transmission signal from the other user in the signal obtained by despread processing and to keep the communication quality good. Moreover, the number of iteration is changed based on the detected communication quality at the error correcting decoding time, making it possible to keep the communication quality good.

Moreover, this embodiment explained the case in which the base station apparatus changed the number of iteration based on the communication quality at the error correcting decoding time. However, the present invention is not limited to this case, and can be applied to the case in which the communication terminal apparatus changes the number of iteration based on the communication quality at the error correcting decoding time.

### (Embodiment 7)

This embodiment will explain the case in which the change of spreading code to be used in communication or the change of error correcting code is performed based on a target SIR value set by the base station apparatus in spreading code CDMA radio communication system that performs transmission power control between the communication terminal apparatus and the base station apparatus.

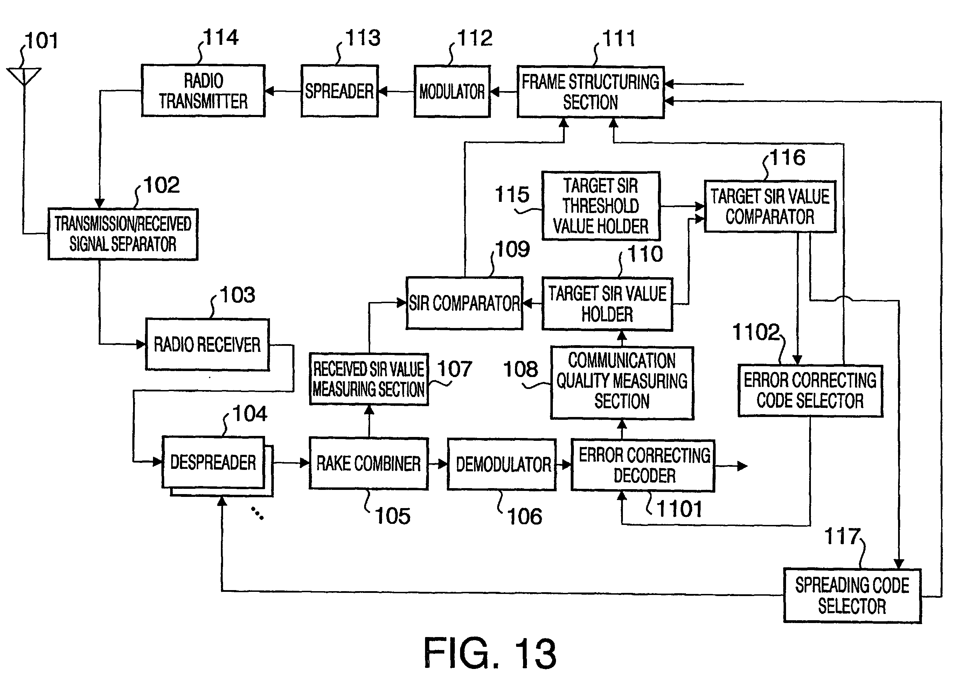

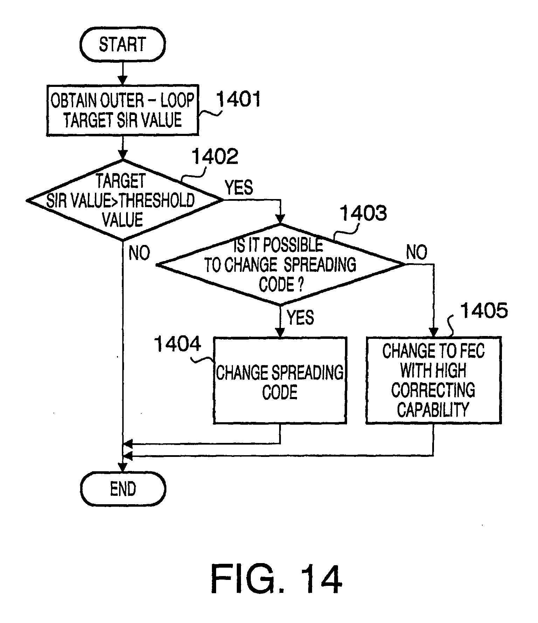

FIG. 13 is a block diagram illustrating the configuration of a base station apparatus having a radio communication apparatus according to a seventh embodiment of the present invention. In FIG. 13, the same reference numerals as those of FIG. 1 or FIG. 11 are added to the same components as those of Embodiment 1 (FIG. 1) or Embodiment 5 (FIG. 11), and the specific explanation is omitted. FIG. 14 is a flowchart illustrating the operation of the base station apparatus having the radio communication apparatus according to the seventh embodiment of the present invention.

Referring to FIGS. 13 and 14, in ST1401, a target SIR value is obtained. In ST1402, a comparison between the target SIR value and the threshold value is performed. In the case where the target SIR value is equal to or less than the threshold value (communication quality is good), processing is ended. While, in the case where the target SIR value is greater than the threshold value (communication quality is poor), processing goes to ST1403.

In ST1403, it is determined whether or not the use of the spreading code with the same spreading factor (code length) as that of the current spreading code is possible. When the use of the spreading code with the same spreading factor is possible, processing goes to ST1404.

Next, the use of the spreading code is not possible, it is determined that the use of the spreading code having a longer code length than that of the current spreading code is possible. When the use of the forgoing spreading code is possible, processing goes to ST1404. When the use of the spreading code with the same spreading factor is not possible or the use of spreading code is possible but the reduction in transmission rate is not allowed, processing goes to ST1405.

In ST1404, the spreading code as explained in Embodiment 1 is set by the spreading code selector 117. In ST 1405, the error correcting code as explained in Embodiment 5 is selected by the error correcting code selector 1102.

Thus, according to this embodiment, the communication quality is detected using the target SIR and the spreading code to be used in spread processing is changed based on the detected communication quality, making it possible to prevent interference from being caused by the transmission signal from the other user in the signal obtained by despread processing. Accordingly, this allows the communication quality to be maintained good. Moreover, in the case where the change in the spreading code to be used in the spread processing is not possible or the change is possible but the reduction in transmission rate is not allowed, the error correcting code is set based on the detected communication quality. This makes it possible to reduce interference caused by the transmission signal from the other user in the signal obtained by despread processing. Accordingly, this allows the communication quality to be maintained good.

Moreover, this embodiment explained the case in which the base station apparatus performed the change of spreading code or the change of error correcting code based on the communication quality. However, the present invention is not limited to this case, and can be applied to the case in which the communication terminal apparatus performs the change of spreading code or the change of error correcting code based on the communication quality.

Still moreover, the radio communication apparatuses explained in Embodiment 1 to Embodiment 7 may be combined with one another.

Thus, according to the present invention, it is possible to provide the radio communication apparatus that can keep the communication quality good by simple processing.

This application is based on the Japanese Patent Application No. 2000-094662 filed on March 30, 2000, entire content of which is expressly incorporated by reference herein.

### Industrial Applicability

The present invention relates to the radio communication apparatus used in the mobile radio communication system, and is particularly suitable for use in the filed of radio communication apparatus employed in the CDMA mobile radio communication system.

## Claims

1. A radio communication apparatus comprising:
detecting means for detecting a communication quality on a radio communication apparatus targeted for communication;
transmission processing setting means for setting transmission processing for said radio communication apparatus targeted for communication based on the detected communication quality;
reception processing means for performing reception processing corresponding to said set transmission processing; and
transmitting means for transmitting a transmission signal having information relating to said set transmission processing added thereto to said radio communication apparatus targeted for communication.

2. The radio communication apparatus according to claim 1, wherein said transmission processing setting means sets a spreading code to be used by said radio communication apparatus targeted for communication based on the detected communication quality, said reception processing means performs despreading on a received signal using said set spreading code, and said transmitting means adds information relating to the selected spreading code to the transmission signal.

3. The radio communication apparatus according to claim 1, wherein said reception processing means performs interference cancellation processing on a received signal based on the detected communication quality.

4. The radio communication apparatus according to claim 1, wherein said transmission processing setting means sets a transmission rate to be used by said radio communication apparatus targeted for communication based on the detected communication quality, said reception processing means performs despreading on a received signal using a spreading code corresponding to the set transmission rate, and said transmitting means adds information relating to the selected transmission rate to the transmission signal.

5. The radio communication apparatus according to claim 1, wherein said transmission processing setting means sets an error correcting code to be used by said radio communication apparatus targeted for communication based on the detected communication quality, said reception processing means performs error correcting decoding on a received signal using the set error correcting code, and said transmission means adds information relating to the set error correcting code to the transmission signal.

6. The radio communication apparatus according to claim 1, wherein said reception processing means performs error correcting decoding on a received signal according to the number of interations based on the detected communication quality.

7. The radio communication apparatus according to claim 1, wherein said detecting means comprises setting means for setting a target reception quality value based on a quality of a demodulated signal, and detects the communication quality based on the set target reception quality value.

8. A radio communication apparatus having extracting means for extracting information relating to transmission processing using a signal transmitted from another radio communication apparatus targeted for communication, and transmitting means for performing transmission processing based on the extracted information,
wherein said another radio communication apparatus targeted for communication comprises:
detecting means for detecting a communication quality on the radio communication apparatus;
transmission processing setting means for setting transmission processing for the radio communication apparatus based on the detected communication quality;
reception processing means for performing reception processing corresponding to said set transmission processing; and
transmitting means for transmitting a transmission signal having information relating to said set transmission processing added thereto to the radio communication apparatus.

9. The radio communication apparatus according to claim 8, wherein said extracting means extracts information relating to a spreading code, and said transmission means performs spreading on transmission information using said spreading code.

10. The radio communication apparatus according to claim 8, wherein said extracting means extracts information relating to a transmission rate, and said transmitting means changes a transmission rate for transmission information to said transmission rate, and performs spreading on transmission information with said changed transmission rate using a spreading code corresponding to said transmission rate.

11. The radio communication apparatus according to claim 8, wherein said extracting means extracts information relating to an error correcting code, and said transmitting means provides error correcting code processing to said transmission information using said error correcting code.

12. A communication terminal apparatus comprising:
detecting means for detecting a communication quality on a base station apparatus;
transmission processing setting means for setting transmission processing for the base station apparatus based on the detected communication quality;
reception processing means for performing reception processing corresponding to said set transmission processing; and
transmitting means for transmitting a transmission signal having information relating to said set transmission processing added thereto to the base station apparatus.

13. A communication terminal apparatus comprising:
extracting means for extracting information relating to transmission processing using a signal transmitted from a base station apparatus, and transmitting means for performing transmission processing based on said extracted information,
wherein said base station apparatus comprises :
detecting means for detecting a communication quality on the communication terminal apparatus;
transmission processing setting means for setting transmission processing for the communication terminal apparatus based on the detected communication quality;
reception processing means for performing reception processing corresponding to said set transmission processing; and
transmitting means for transmitting a transmission signal having information relating to said set transmission processing added thereto to the communication terminal apparatus.

14. A base station apparatus comprising:
detecting means for detecting a communication quality on a communication terminal apparatus;
transmission processing setting means for setting transmission processing for said communication terminal apparatus based on the detected communication quality;
reception processing means for performing reception processing corresponding to said set transmission processing; and
transmitting means for transmitting a transmission signal having information relating to said set transmission processing added thereto to said communication terminal apparatus.

15. A base station apparatus comprising:
extracting means for extracting information relating to transmission processing using a signal transmitted from a communication terminal apparatus, and transmitting means for performing transmission processing based on said extracted information,
wherein said communication terminal apparatus comprises:
detecting means for detecting a communication quality on the base station apparatus;
transmission processing setting means for setting transmission processing for the base station apparatus based on the detected communication quality;
reception processing means for performing reception processing corresponding to said set transmission processing; and
transmitting means for transmitting a transmission signal having information relating to said set transmission processing added thereto to the base station apparatus.

16. A radio communication method comprising the steps of:
detecting a communication quality on a radio communication apparatus targeted for communication;
setting transmission processing for the radio communication apparatus targeted for communication based on the detected communication quality;
performing reception processing corresponding to said set transmission processing; and
transmitting a transmission signal having information relating to said set transmission processing added thereto to the radio communication apparatus targeted for communication.

17. The radio communication method according to claim 16, wherein said detecting step includes the step of setting a target reception quality value based on a quality of a modulated signal wherein the communication quality is detected based on the set target reception quality value.
